(19) Europäisches Patentamt
European Patent Office
Office européen des brevets

(11) EP 4 213 234 A1

(12) EUROPEAN PATENT APPLICATION
published in accordance with Art. 153(4) EPC

(43) Date of publication:
**19.07.2023 Bulletin 2023/29**

(21) Application number: **21955260.1**

(22) Date of filing: **25.11.2021**

(51) International Patent Classification (IPC):
***H01M 4/13*** *(2010.01)* ***H01M 4/62*** *(2006.01)*

(52) Cooperative Patent Classification (CPC):
Y02E 60/10

(86) International application number:
**PCT/CN2021/133144**

(87) International publication number:
**WO 2023/092389 (01.06.2023 Gazette 2023/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Contemporary Amperex Technology Co., Limited**
**Fujian 352100 (CN)**

(72) Inventors:
- **WU, Qifan**
  **Ningde City, Fujian 352100 (CN)**
- **ZHANG, Ming**
  **Ningde City, Fujian 352100 (CN)**
- **LIU, Yacheng**
  **Ningde City, Fujian 352100 (CN)**
- **YIN, Ziyi**
  **Ningde City, Fujian 352100 (CN)**
- **ZHANG, Tongxian**
  **Ningde City, Fujian 352100 (CN)**

(74) Representative: **Frick, Robert**
**Lorenz Seidler Gossel**
**Rechtsanwälte Patentanwälte**
**Partnerschaft mbB**
**Widenmayerstraße 23**
**80538 München (DE)**

# (54) POSITIVE ELECTRODE SLURRY, POSITIVE ELECTRODE PLATE, AND SECONDARY BATTERY COMPRISING POSITIVE ELECTRODE PLATE

(57) Provided in the present invention is a positive electrode slurry comprising a polyether phosphate, wherein the polyether phosphate comprises at least the following structural units:

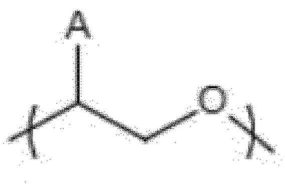

(I) ,

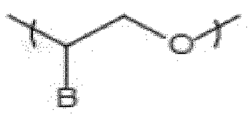

(II)

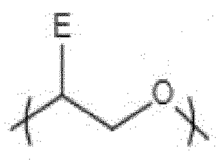

(III) ,

and a structural unit (IV) that is a phosphate group,
wherein A is hydrogen, halogen or haloalkyl; B is hydroxyl, R, OR, or ROR', wherein the R and R' are each independently

EP 4 213 234 A1

a linear or branched alkyl group containing 1 to 8 carbons; and E is phenyl, alkyl-substituted phenyl, ether-substituted phenyl, or halophenyl. The addition of the polyether phosphate described in the present application can increase the coating weight of a positive electrode plate, thereby improving the energy density of a battery.

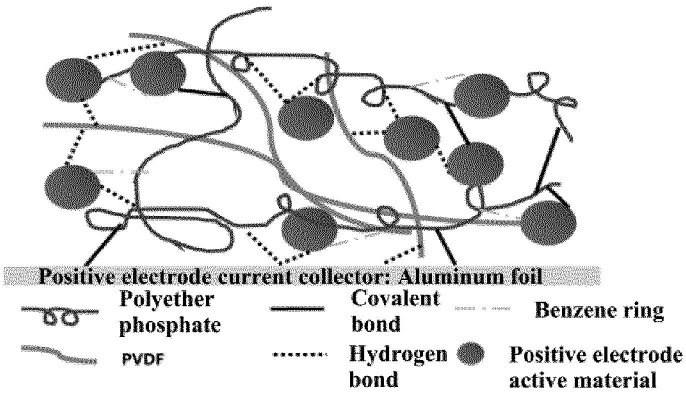


FIG. 1

## Description

### Technical Field

The present application relates to the technical field of lithium batteries, and in particular, to a positive electrode plate comprising a polyether phosphate. In addition, the present application also relates to a secondary battery comprising the positive electrode plate, and a battery pack, a battery module, and a power consuming device comprising the secondary battery.

### Background Art

In recent years, with the increasing application range of lithium-ion batteries, lithium-ion batteries are widely used in energy storage power systems such as hydroelectric, thermal, wind and solar power stations, as well as electric tools, electric bicycles, electric motorcycles, electric vehicles, military equipment, aerospace and other fields. Due to the great development of lithium-ion batteries, higher requirements have been placed on the lithium-ion batteries in terms of improved energy density and reduced costs.

At present, one of the effective ways to improve the energy density of lithium-ion batteries is to increase the coating weight of a positive electrode plate. However, an increase in the coating weight of the positive electrode plate can lead to serious risks in the manufacture of the plate. Since the characteristics of a positive electrode slurry and the plate directly affect the production of a cell, an increase in the coating weight of the positive electrode plate will also make it difficult to manufacture the cell.

Therefore, the positive electrode plate still needs to be improved.

### Summary of the Invention

The present application has been made in view of the above problems, and an objective thereof is to provide a positive electrode slurry comprising a specific polyether phosphate and a positive electrode plate prepared from the positive electrode slurry or a positive electrode plate comprising the positive electrode slurry.

Therefore, a first aspect of the present application provides a positive electrode slurry comprising a positive electrode active material and a polyether phosphate, wherein the polyether phosphate comprises at least the following structural units:

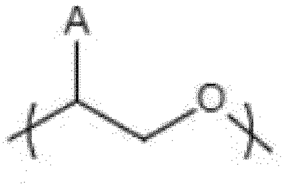

(I) ,

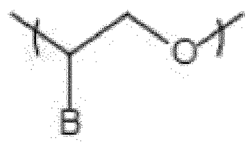

(II)

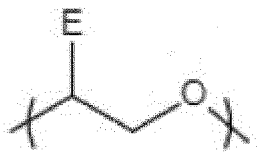

(III) ,

and a structural unit (IV) that is a phosphate group,
wherein,

A is hydrogen, halogen or haloalkyl, wherein the halogen optionally is fluorine, chlorine or bromine; and optionally, A is hydrogen or fluoromethyl;

B is hydroxyl, R, OR, or ROR', wherein the R and R' are each independently a linear or branched alkyl group containing 1 to 8 carbons; and optionally, B is methyl, ethyl or ethoxymethyl; and

E is phenyl, alkyl-substituted phenyl, ether-substituted phenyl or halophenyl, and optionally, E is phenyl or fluorophenyl.

In any embodiment of the present application, after the polyether phosphate is added into the positive electrode slurry, the energy density of the resulting lithium-ion battery is significantly improved. In addition, due to the improvement of the positive electrode plate, the used amount of a cell can be saved, thereby reducing the total cost of materials for the cell.

In some embodiments, the polyether phosphate has a number average molecular weight ranging from 10,000 to 80,000, optionally 10,000 to 60,000, and more optionally 30,000 to 50,000.

If the molecular weight is too small, the stability of the positive electrode slurry is poor, thus the phenomenon of physical gelling is likely to occur, and the resistance of the positive electrode film plate will be deteriorated, which will also have an adverse effect on the battery performance. If the molecular weight is too large, it is unfavorable for the dispersion of the polyether phosphate in the positive electrode slurry. Therefore, the number average molecular weight of the polyether phosphate must be controlled within the above range.

Based on the total molar amount of structural unit (I) to structural unit (IV), the molar proportion of structural unit (I) is 0 to 75 mol%, the molar proportion of structural unit (II) is 0 to 65 mol%, the molar proportion of structural unit (III) is 5 to 65 mol%, and the molar proportion of structural unit (IV) is 4 to 15 mol%, wherein the molar proportions of structural unit (I) and structural unit (II) are not both zero.

The above molar proportions of the structural units (I) to (IV) can ensure that sufficient hydrogen bonds and a suitable amount of covalent bonds are formed between the obtained polyether phosphate and a positive electrode active material, current collector or the like, so as to ensure the stability of the positive electrode plate during the preparation process and the flexibility of the positive electrode plate as well as the dispersibility of each positive electrode material, thereby improving the energy density of the battery.

In some embodiments, the weight ratio of the polyether phosphate to the positive electrode active material ranges from 0.0005 to 0.030, optionally 0.001 to 0.02, more optionally 0.001 to 0.01, and most optionally 0.001 to 0.007.

When the ratio is too small, the positive electrode plate will crack at high coating weight, and when the ratio is too large, the battery performance will be adversely affected.

In some embodiments, the positive electrode active material is selected from at least one of lithium iron phosphate, lithium iron manganese phosphate, lithium manganese oxide, lithium cobalt oxide, lithium nickel cobalt manganese oxide, lithium nickel cobalt aluminum oxide, lithium nickel oxide or a mixture thereof.

When the positive electrode active material is at least one of lithium iron phosphate, lithium iron manganese phosphate, lithium manganese oxide, lithium cobalt oxide, lithium nickel cobalt manganese oxide, lithium nickel cobalt aluminum oxide, lithium nickel oxide or a mixture thereof, the addition of the polyether phosphate can better achieve the effects of improving the flexibility of the plate, increasing the coating weight of the plate and the like.

In some embodiments, the positive electrode slurry has a gelling factor G ranging from 0 to 1, and optionally 0 to 0.3,

wherein $G = (m1 - m2)/m1$, and when $G = 0$ to $0.3$, it is determined that the slurry is not gelled, and when $G > 0.3$, it is determined that it is gelled;

where m1 is the mass of the positive electrode slurry obtained after filtering 2 kg of an initial positive electrode slurry for 10 min with a 100-mesh filter screen,

and m2 is the mass of the positive electrode slurry obtained after filtering 2 kg of a positive electrode slurry that is left for 48 hours for 10 min with a 100-mesh filter screen, wherein,

the positive electrode slurry used in the measurement of m1 and the positive electrode slurry used in the measurement of m2 are the same batch of positive electrode slurry.

The closer the mass of the positive electrode slurry obtained by filtration after standing for 48 hours is to the initially obtained mass, the smaller the G value is, indicating that the slurry is less likely to gel and the slurry state is better. The gelling property of the positive electrode slurry described in the present application are very good.

A second aspect of the present application provides a positive electrode plate comprising

a positive electrode current collector; and

a positive electrode film layer on at least one surface of the positive electrode current collector, the positive electrode film layer comprising the positive electrode slurry described in the first aspect of the present application. As described above, by adding the polyether phosphate, the present application allows for an increase in coating weight on the positive electrode plate. This is also reflected in an increase in the maximum weight of the positive electrode film layer. In some embodiments, the mass of the positive electrode film layer per unit area plate ranges from 13 to 43 $mg/cm^2$, optionally 22 to 31 $mg/cm^2$, and more optionally 22 to 29 $mg/cm^2$, where the mass is the mass of the positive electrode film layer on a single surface of the plate. If there is a positive electrode film layer on both surfaces

of the positive electrode plate, the mass range of the positive electrode film layer per unit area plate is twice the above range, that is, the mass range is 26 to 86 mg/cm$^2$, optionally 44 to 62 mg/cm$^2$, and more optionally 44 to 58 mg/cm$^2$, where the mass is the mass of the positive electrode film layer on both surfaces of the plate.

When the weight of the positive electrode film layer per unit area plate is too small, the uniformity of the plate is poor; and when the weight of the positive electrode film layer per unit area plate is too large, severe cracking will occur in the coating process of the plate, making it impossible to continue production. In the present application, the weight of the positive electrode film layer per unit area plate is limited to the above range, so as to ensure that the best effect can be achieved within this range.

The positive electrode plate described in the present application has very good flexibility, and the coating weight is significantly improved. The application of the positive electrode plate in a secondary battery, for example, directly adding into the positive electrode slurry during preparation, can significantly improve the energy density of the battery.

In some embodiments, the positive electrode film layer comprises two sublayers which are parallel to the positive electrode current collector and overlap each other, wherein the ratio of the weight content of polyether phosphate in the sublayer closer to the positive electrode current collector to the weight content of polyether phosphate in the sublayer farther from the positive electrode current collector ranges from 0 to 60, and optionally 0.1 to 30.

When the coating weight is above 23 mg/cm$^2$, twice coating can reduce the material cost of the flexible additive compared to single thick coating, and also, the polyether phosphate of the present application can function better without affecting the electrical performance.

In some embodiments, in the case that the flexibility of the positive electrode plate is measured by winding needles described in the present application,

when the diameter R of the winding needle $\leq$ 3.0 mm, the positive electrode plate does not crack, or
when the diameter R of the winding needle = 3.0 mm, the positive electrode plate cracks, but when the diameter R of the winding needle = 4.0 mm, the positive electrode plate does not crack.

After the polyether phosphate described in the present application is added, the cold pressing pressure can be reduced, thereby reducing cracks and reducing the risk of belt breaking, thus improving the flexibility of the plate.

In some embodiments, the infiltration rate increase rate I of the positive electrode plate ranges from 2 to 20%, and optionally 6 to 15%,

wherein $I = (I2-I1)/I1 \times 100\%$,
where I2 is the infiltration rate of the positive electrode plate in an electrolyte solution,
and I1 is the infiltration rate of the positive electrode plate without the polyether phosphate in the electrolyte solution, wherein the positive electrode plate used in the measurement of I1 is the same as the positive electrode plate used in the measurement of I2, except that the positive electrode plate used in the measurement of I1 does not comprise the polyether phosphate, while the positive electrode plate used in the measurement of I2 comprises the polyether phosphate.

The good infiltration property of the plate can achieve good infiltration and liquid retention of the electrolyte solution, so as to realize effective infiltration of the cell plate, avoid insufficient infiltration of the plate, and improve the efficiency of electrolyte injection in the cell and the infiltration property of the plate in the cycling process, thereby effectively improving the performance of battery products. The infiltration property of the positive electrode plate described in the present application in the electrolyte solution is very good.

A third aspect of the present application provides a secondary battery comprising the negative electrode plate described in the first aspect of the present application.

A fourth aspect of the present application provides a battery module comprising the secondary battery described in the second aspect of the present application.

A fifth aspect of the present application provides a battery pack comprising the battery module described in the third aspect of the present application.

A sixth aspect of the present application provides a power consuming device comprising at least one of the secondary battery described in the third aspect of the present application, the battery module described in the fourth aspect of the present application, or the battery pack described in the fifth aspect of the present application.

## Brief Description of the Drawings

FIG. 1 is a schematic diagram of the principle of interaction between a polyether phosphate and other materials in a positive electrode plate of the present application, where the polyether phosphate is the polyether phosphate described in the present application.

FIG. 2 is a schematic diagram of the process of cracking in coating caused by capillary tension in a positive electrode plate during the coating process that occurs in the prior art, where an active material is a positive electrode active material, and an acting force is the acting force in the coating process, and where the polyether phosphate described in the present application is not used.

FIG. 3 is a schematic diagram of the positive electrode plate described in the present application without cracking in the coating process, where an active material is a positive electrode active material, and an acting force is the acting force in the coating process, and where the polyether phosphate described in the present application is used.

FIG. 4 is a schematic diagram showing an increase in the maximum coating weight per unit area in the positive electrode plate after using the polyether phosphate of the present application, where a positive electrode material represents a positive electrode active material, SP represents a conductive agent used in the positive electrode plate, and PVDF represents a binder used in the positive electrode plate; and where X represents the maximum coating thickness of a positive electrode slurry not comprising the polyether phosphate, and Y represents the maximum coating thickness of a positive electrode slurry comprising the polyether phosphate under the same conditions, and obviously, Y is greater than X.

FIG. 5 is a schematic diagram of winding needles used in the flexibility test for the positive electrode plate of the present application.

**Detailed Description of Embodiments**

Hereinafter, embodiments of a negative electrode plate and preparing method thereof, a positive electrode plate, a secondary battery, a battery module, a battery pack and an electrical device of the present application are described in detail and specifically disclosed with reference to the accompanying drawings appropriately. However, unnecessary detailed illustrations may be omitted in some instances. For example, there are situations where detailed description of well known items and repeated description of actually identical structures are omitted. This is to prevent the following description from being unnecessarily verbose, and facilitates understanding by those skilled in the art. Moreover, the accompanying drawings and the descriptions below are provided for enabling those skilled in the art to fully understand the present application, rather than limiting the subject matter disclosed in claims.

"Ranges" disclosed in the present application are defined in the form of lower and upper limits, and a given range is defined by selection of a lower limit and an upper limit, the selected lower and upper limits defining the boundaries of the particular range. Ranges defined in this manner may be inclusive or exclusive, and may be arbitrarily combined, that is, any lower limit may be combined with any upper limit to form a range. For example, if the ranges of 60-120 and 80-110 are listed for a particular parameter, it should be understood that the ranges of 60-110 and 80-120 are also contemplated. Additionally, if minimum range values 1 and 2 are listed, and maximum range values 3, 4, and 5 are listed, the following ranges are all contemplated: 1-3, 1-4, 1-5, 2-3, 2-4 and 2-5. In the present application, unless stated otherwise, the numerical range "a-b" denotes an abbreviated representation of any combination of real numbers between a and b, where both a and b are real numbers. For example, the numerical range "0-5" means that all real numbers between "0-5" have been listed herein, and "0-5" is just an abbreviated representation of combinations of these numerical values. In addition, when a parameter is expressed as an integer of $\geq 2$, it is equivalent to disclosing that the parameter is, for example, an integer of 2, 3, 4, 5, 6, 7, 8, 9, 10, 11, 12, and the like.

All the embodiments and optional embodiments of the present application can be combined with one another to form new technical solutions, unless otherwise stated.

All technical features and optional technical features of the present application can be combined with one another to form a new technical solution, unless otherwise stated.

Unless otherwise stated, all the steps of the present application can be performed sequentially or randomly, preferably sequentially. For example, the method including steps (a) and (b) indicates that the method may include steps (a) and (b) performed sequentially, and may also include steps (b) and (a) performed sequentially. For example, reference to "the method may further include step (c)" indicates that step (c) may be added to the method in any order, e.g., the method may include steps (a), (b) and (c), steps (a), (c) and (b), and also steps (c), (a) and (b), etc.

The terms "comprise" and "include" mentioned in the present application are openended or closed-ended, unless otherwise stated. For example, "comprise" and "include" may mean that other components not listed may further be comprised or included, or only the listed components may be comprised or included.

In the present application, the term "or" is inclusive unless otherwise specified. For example, the phrase "A or B" means "A, B, or both A and B." More specifically, a condition "A or B" is satisfied by any one of the following: A is true (or present) and B is false (or not present); A is false (or not present) and B is true (or present); or both A and B are true (or present).

Inventive concept

For lithium-ion batteries, improving the energy density is a trend, and one of the ways to improve the energy density is to increase the coating weight of a positive electrode plate. However, the inventors of the present application have found that, as shown in FIG. 2, in the coating process of a conventional positive electrode slurry, during or after solvent evaporation, the positive electrode plate will crack due to capillary tension, and the cracking will propagate further, resulting in extensive cracking. In addition, there is also a phenomenon that the edge of the plate is curled in this process. Moreover, belt breaking may occur in the cold pressing process because the positive electrode plate is hard and brittle, and the inner ring may seriously break in the winding process. Based on this, the inventors of the present application have designed and synthesized a flexible polymer material, a polyether phosphate, and by adding the flexible material, the coating weight is increased, the coating quality is improved, the risks in the cold pressing and winding processes are eliminated, and the overall cost of materials used to make batteries is reduced.

Therefore, a first aspect of the present application provides a positive electrode slurry comprising a positive electrode active material and a polyether phosphate, wherein the polyether phosphate comprises at least the following structural units:

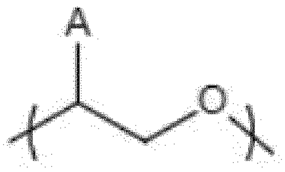

(I) ,

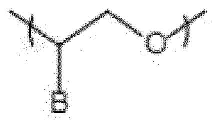

(II)

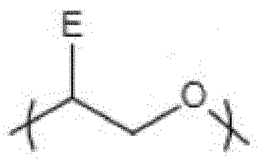

(III) ,

and a structural unit (IV) that is a phosphate group,
wherein,

A is hydrogen, halogen or haloalkyl, wherein the halogen optionally is fluorine, chlorine or bromine; and optionally, A is hydrogen or fluoromethyl;
B is hydroxyl, R, OR, or ROR', wherein the R and R' are each independently a linear or branched alkyl group containing 1 to 8 carbons; and optionally, B is methyl, ethyl or ethoxymethyl; and
E is phenyl, alkyl-substituted phenyl, ether-substituted phenyl or halophenyl, and optionally, E is phenyl or fluorophenyl.

In the polyether phosphate described in the present application, the structural unit (IV) is present as an end group.

Optionally, in some embodiments, the polyether phosphate is formed by polymerizing the following components:

(a) ethylene oxide which is unsubstituted or substituted with halogen or halogenated $C_{1-8}$ alkyl;
(b) ethylene oxide substituted with hydroxy, hydroxyalkyl, R, OR, or ROR', wherein the R and R' are each independently $C_{1-8}$ alkyl, wherein the alkyl in hydroxyalkyl is $C_{1-8}$ alkyl;
(c) ethylene oxide substituted with halophenyl, haloalkylphenyl or phenyl; and
(d) a phosphating agent, which is phosphorus pentoxide;

wherein based on the total molar amount of components (a) to (d), the molar proportion of component (a) is 0 to 75 mol%; the molar proportion of component (b) is 0 to 65 mol%; the molar proportion of component (c) is 5 to 65 mol%; and the molar proportion of component (d) is 4 to 15 mol%;
wherein the components (a) and (b) are not both zero.

In some embodiments, optionally, component (a) is selected from ethylene oxide, epifluorohydrin, epichlorohydrin, and epibromohydrin.

In some embodiments, optionally, component (b) is selected from propylene oxide, ethyl glycidyl ether, isopropyl glycidyl ether, butyl glycidyl ether, isopropyl glycidyl ether, epoxybutane, 1,2-epoxybutane, 1,2-epoxypentane, 1,2-epoxyheptane, 1,2-epoxyoctane, 1,2-epoxydecane, 1,2-epoxy-3-methylbutane, and glycidol.

In some embodiments, optionally, component (c) is selected from styrene oxide and phenyl.

In the present application, $C_{1-8}$ alkyl is a linear or branched alkyl group containing 1-8 carbons, which may be selected from, for example, methyl, ethyl, propyl, butyl, pentyl, hexyl, heptyl, octyl, isopropyl, isobutyl, tert-butyl, isopentyl, tert-amyl, neopentyl, 2-methylpentyl, 3-methylpentyl, 2,2-dimethylbutyl, 2,3-dimethylbutyl, 2-methylhexyl, 3-methylhexyl, 2,2-dimethylpentyl, 3,3-dimethylpentyl, 2,3-dimethylpentyl, 2,4-dimethylpentyl, 3-ethylpentyl, 2,2,3-trimethylbutyl, 2-methylheptyl, 3-methylheptyl, 4-methylheptyl, 2,2-dimethylhexane, 3,3-dimethylhexane, 2,3-dimethylhexane, 2,4-dimethylhexane, 2,5-dimethylhexane, 3,4-dimethylhexane, 3-ethylhexane, 2,2,3-trimethylpentane, 2,2,4-trimethylpentane, 2,3,3-trimethylpentane, 2,3,4-trimethylpentane, 2-methyl-3-ethylpentane, 3-methyl-3-ethylpentane, and 2,2,3,3-tetramethylbutane.

In the present application, $C_{1-8}$ alkenyl is a linear or branched alkenyl group containing 1-8 carbons, which may include, but is not limited to, vinyl, propenyl, allyl, 1-methylprop-2-en-1-yl, 2-methylprop-2-en-1-yl, but-2-en-1-yl, but-3-en-1-yl, 1-methylbut-3-en-1-yl, and 1-methylbut-2-en-1-yl and the like.

In the present application, the alkyl substituent can be a linear or branched alkyl group containing 1-8 carbons, which is optionally selected from methyl, ethyl, propyl, isopropyl, n-butyl, isobutyl, and tert-butyl. Optionally, the alkyl substitution is mono- or di-substitution. In some embodiments, the alkyl-substituted phenyl group can be selected from, for example, 3,4-dimethylphenyl, 2-methylphenyl, 3,5-dimethylphenyl, and 4-(2-methylpropyl)phenyl.

In the present application, the alkyl group in the haloalkyl group is optionally a linear or branched alkyl group containing 1-8 carbons, which, for example, is optionally selected from methyl, ethyl, propyl, butyl, pentyl, hexyl, heptyl, octyl, isopropyl, isobutyl, tert-butyl, isopentyl, tert-amyl, neopentyl, 2-methylpentyl, 3-methylpentyl, 2,2-dimethylbutyl, 2,3-dimethylbutyl, 2-methylhexyl, 3-methylhexyl, 2,2-dimethylpentyl, 3,3-dimethylpentyl, 2,3-dimethylpentyl, 2,4-dimethylpentyl, 3-ethylpentyl, 2,2,3-trimethylbutyl, 2-methylheptyl, 3-methylheptyl, 4-methylheptyl, 2,2-dimethylhexane, 3,3-dimethylhexane, 2,3-dimethylhexane, 2,4-dimethylhexane, 2,5-dimethylhexane, 3,4-dimethylhexane, 3-ethylhexane, 2,2,3-trimethylpentane, 2,2,4-trimethylpentane, 2,3,3-trimethylpentane, 2,3,4-trimethylpentane, 2-methyl-3-ethylpentane, 3-methyl-3-ethylpentane, and 2,2,3,3-tetramethylbutane. The halogen in the haloalkyl group can be selected from fluorine, chlorine, bromine, and iodine.

In the present application, the ether substituent may be a linear or branched alkoxy group containing 1-8 carbons, which is optionally selected from methoxy, ethoxy, propoxy or butoxy. In some embodiments, the ether-substituted phenyl group may be selected from, for example, 4-methoxyphenyl, 3-methoxyphenyl, and the like.

In the present application, the haloalkylphenyl group refers to phenyl substituted with haloalkyl, where the haloalkyl group refers to alkyl substituted with halogen, where the alkyl group is $C_{1-8}$ alkyl.

In the present application, the halophenyl group represents phenyl substituted with halogen. In the present application, the halogen can be selected from fluorine, chlorine, bromine, and iodine. In some embodiments, the halophenyl group may be selected from, for example, 4-fluorophenyl, 2-fluorophenyl, 2,6-difluorophenyl, 4-(trifluoromethyl)phenyl, 4-chlorophenyl, 3-chlorophenyl, 4-bromophenyl, 3-bromophenyl or 2-bromophenyl.

The structural unit (I) (or the structural unit formed by component (a)) in the structural formula (1) of the polyether phosphate described in the present application can improve the ability to form hydrogen bonds between the polymer and the surface of positive electrode particles, conductive carbon, and aluminum foil; the structural unit (II) (or the structural unit formed by the component (b)) can extend the branch chain of the molecule to ensure that the polyether phosphate forms covalent bonds with the surface of positive electrode particles, conductive carbon, and the surface of the aluminum foil, so as to ensure that the positive electrode particles do not migrate in the coating process; and the structural unit (III) (or the structural unit formed by component (c)) can improve the rigidity of the polyether phosphate, so that it has a certain strength and hardness, thereby improving the oxidation resistance and electrolyte resistance of the polyether phosphate, and also, the benzene ring interacts with the surface of positive electrode particles to ensure the dispersibility of the polyether phosphate. The phosphate end groups play an anchoring role and can serve as a wetting and dispersing agent to uniformly and stably disperse the particles of a positive electrode active component in a NMP medium.

As shown in FIG. 1, the polyether phosphate in the present application is a long flexible chain, which not only can form hydrogen bonds with the positive electrode active material and the positive electrode current collector through the structural unit (I) (or the structural unit formed by component (a)), but also can form covalent bonds with the positive electrode active material and the positive electrode current collector through the structural unit (II) (or the structural unit formed by component (b)), and can also interact with the surface of particles of the positive electrode active material through the benzene ring in the structural unit (III) (or the structural unit formed by component (c)). In addition, covalent bonds can also be formed between the polyether phosphates in the present application. Therefore, by adding into the

positive electrode slurry a flexible additive, namely, the polyether phosphate described in the present application, the stability of the positive electrode slurry and the flexibility of the positive electrode plate can be improved, and the dispersibility of each material in the positive electrode plate can be ensured, thereby increasing the coating weight of the positive electrode plate. As shown in FIG. 3, after the polyether phosphate is added, the positive electrode slurry of the present application does not crack in the entire coating process. As shown in FIG. 4, after the polyether phosphate of the present application is added, the maximum coating thickness (weight) in the positive electrode plate is significantly increased.

The polyether phosphate described in the present application can be obtained according to conventional technical means in the art, or can also be prepared using the following steps:

Step 1: a polyether is generated from an alkylene oxide monomer under an alkaline condition, where optionally, a solvent used is one or more of dimethyl sulfoxide, acetone and diethyl ether; optionally, a basic material that may be added in the preparation is, for example, NaOH, KOH, or dicyclohexylcarbodiimide; optionally, the reaction temperature of this reaction ranges from 80 to 160°C, and the reaction time ranges from 3 to 7 h; optionally, the stirring speed in the reaction process ranges from 1000 to 2000 r/min; and optionally, after the reaction is completed, a purification step by distillation under reduced pressure is performed.

Step 2: the polyether in step (1) is reacted with a phosphating agent to generate the polyether phosphate, where optionally, the reaction is carried out in a reaction kettle; optionally, the reaction temperature of this reaction ranges from 60 to 130°C; optionally, the reaction time ranges from 2 to 15 h; optionally, stirring is performed in the reaction process, where the stirring time optionally is 1 to 10 h and the stirring speed optionally is 1000 to 2000 r/min; and optionally, after the reaction is completed, a purification step by distillation under reduced pressure is performed.

In some embodiments, the positive electrode slurry described in the present application has a pH ranging from about 6 to 9 at 20 to 60°C. The pH value is tested according to conventional means in the art.

In any embodiment of the present application, after the polyether phosphate is added into the positive electrode slurry, the energy density of the resulting lithium-ion battery is significantly improved. In addition, due to the improvement of the positive electrode plate, the used amount of a cell can be saved, thereby reducing the total cost of materials for the cell.

In some embodiments, the polyether phosphate has a number average molecular weight ranging from 10,000 to 80,000, optionally 10,000 to 60,000, and more optionally 30,000 to 50,000.

The molecular weight has an influence on the processing performance of the positive electrode plate. When the molecular weight is small, the flexibility of the positive electrode plate is not significantly improved, thus there is still the phenomenon of cracking in coating, and the problems of belt breaking in cold pressing and breaking in winding may occur. If the molecular weight is too small, the stability of the positive electrode slurry is poor, thus the phenomenon of physical gelling is likely to occur, and the resistance of the positive electrode film plate will be deteriorated, which will also have an adverse effect on the battery performance. If the molecular weight is too large, it is unfavorable for the dispersion of the polyether phosphate in the positive electrode slurry. Therefore, the number average molecular weight of the polyether phosphate must be controlled within the above range.

In some embodiments, in the polyether phosphate described in the present application, based on the total molar amount of structural unit (I) to structural unit (IV), the molar proportion of structural unit (I) is 0 to 75 mol%, the molar proportion of structural unit (II) is 0 to 65 mol%, the molar proportion of structural unit (III) is 5 to 65 mol%, and the molar proportion of structural unit (IV) is 4 to 15 mol%, wherein the molar proportions of structural unit (I) and structural unit (II) are not both zero.

Optionally, based on the total molar amount of structural unit (I) to structural unit (IV), the molar proportion of structural unit (I) (or based on the total molar amount of components (a) to (d), the molar proportion of component (a)) can be about 0 mol%, about 5 mol%, about 10 mol%, about 14 mol%, about 15 mol%, about 17 mol%, about 20 mol%, about 25 mol%, about 26 mol%, about 27 mol%, about 28 mol%, about 29 mol%, about 30 mol%, about 31 mol%, about 32 mol%, about 33 mol%, about 35 mol%, about 40 mol%, about 42 mol%, about 45 mol%, about 50 mol%, about 55 mol%, about 60 mol%, about 62 mol%, about 65 mol%, about 68 mol%, about 70 mol%, about 72 mol%, or about 75 mol%. Alternatively, the molar proportion of structural unit (I) is within any range composed of any of the above-mentioned values.

Optionally, based on the total molar amount of structural unit (I) to structural unit (IV), the molar proportion of structural unit (II) (or based on the total molar amount of components (a) to (d), the molar proportion of component (b)) can be about 0 mol%, about 5 mol%, about 10 mol%, about 14 mol%, about 15 mol%, about 17 mol%, about 20 mol%, about 22 mol%, about 25 mol%, about 30 mol%, about 31 mol%, about 35 mol%, about 40 mol%, about 42 mol%, about 43 mol%, about 45 mol%, about 50 mol%, about 52 mol%, about 53 mol%, about 54 mol%, about 55 mol%, about 56 mol%, about 58 mol%, about 60 mol%, about 63 mol%, or about 65 mol%. Alternatively, the molar proportion of structural unit (II) is within any range composed of any of the above-mentioned values.

Optionally, based on the total molar amount of structural unit (I) to structural unit (IV), the molar proportion of structural unit (III) (or based on the total molar amount of components (a) to (d), the molar proportion of component (c)) is about 5 mol%, about 6 mol%, about 7 mol%, about 9 mol%, about 10 mol%, about 11 mol%, about 15 mol%, about 20 mol%, about 23 mol%, about 24 mol%, about 25 mol%, about 26 mol%, about 30 mol%, about 31 mol%, about 33 mol%, about 35 mol%, about 40 mol%, about 45 mol%, about 50 mol%, about 55 mol%, about 59 mol%, about 60 mol%, about 61 mol%, or about 65 mol%. Alternatively, the molar proportion of structural unit (III) is within any range composed of any of the above-mentioned values.

Optionally, based on the total molar amount of structural unit (I) to structural unit (IV), the molar proportion of structural unit (IV) (or based on the total molar amount of components (a) to (d), the molar proportion of component (d)) is about 4 mol%, about 5 mol%, about 6 mol%, about 7 mol%, about 8 mol%, about 9 mol%, about 10 mol%, about 11 mol%, about 12 mol%, about 13 mol%, about 14 mol%, or about 15 mol%. Alternatively, the molar proportion of structural unit (IV) is within any range composed of any of the above-mentioned values.

In the present application, "about" a numerical value means a range, i.e., a range of $\pm$ 3% of the numerical value.

The above molar proportions of the structural units (I) to (IV) (or components (a) to (d)) can ensure that sufficient hydrogen bonds and a suitable amount of covalent bonds are formed between the obtained polyether phosphate and a positive electrode active material, current collector or the like, so as to ensure the stability of the positive electrode plate during the preparation process and the flexibility of the positive electrode plate as well as the dispersibility of each positive electrode material, thereby improving the energy density of the battery.

In some embodiments, the weight ratio of the polyether phosphate to the positive electrode active material ranges from 0.0005 to 0.030, optionally 0.001 to 0.02, more optionally 0.001 to 0.01, and most optionally 0.001 to 0.007.

The weight ratio of the polyether phosphate to the positive electrode active material is 0.0005 to 0.030. When the ratio is too small, the positive electrode plate will crack at high coating weight, and when the ratio is too large, the battery performance will be adversely affected.

In some embodiments, the positive electrode active material is selected from at least one of lithium iron phosphate, lithium iron manganese phosphate, lithium manganese oxide, lithium cobalt oxide, lithium nickel cobalt manganese oxide, lithium nickel cobalt aluminum oxide, lithium nickel oxide or a mixture thereof.

Theoretically, for the positive electrode of a secondary battery, any positive electrode active material for batteries well-known in the art can be used in the present application. As an example, the positive electrode active material may include at least one of the following materials: lithium-containing phosphates of an olivine structure, lithium transition metal oxides and their respective modified compounds. However, the present application is not limited to these materials, and other conventional materials that can be used as positive electrode active materials for batteries may also be used. These positive electrode active materials may be used alone or in combination of two or more. Herein, examples of lithium transition metal oxides may include, but are not limited to, at least one of lithium cobalt oxide (e.g. $LiCoO_2$), lithium nickel oxide (e.g. $LiNiO_2$), lithium manganese oxide (e.g. $LiMnO_2$, $LiMn_2O_4$), lithium nickel cobalt oxide, lithium manganese cobalt oxide, lithium nickel manganese oxide, lithium nickel cobalt manganese oxide (e.g. $LiNi_{1/3}Co_{1/3}Mn_{1/3}O_2$ (also referred to as $NCM_{333}$), $LiNi_{0.5}Co_{0.2}Mn_{0.3}O_2$ (also referred to as $NCM_{523}$), $LiNi_{0.5}Co_{0.25}Mn_{0.25}O_2$ (also referred to as $NCM_{211}$), $LiNi_{0.6}Co_{0.2}Mn_{0.2}O_2$ (also referred to as $NCM_{622}$), $LiNi_{0.8}Co_{0.1}Mn_{0.1}O_2$ (also referred to as $NCM_{811}$)), lithium nickel cobalt aluminum oxide (e.g. $LiNi_{0.85}Co_{0.15}Al_{0.05}O_2$), and modified compounds thereof, and the like. Examples of lithium-containing phosphates of olivine structure may include, but are not limited to, at least one of lithium iron phosphate (e.g. $LiFePO_4$ (also referred to as LFP)), lithium iron phosphate and carbon composites, lithium manganese phosphate (e.g. $LiMnPO_4$), lithium manganese phosphate and carbon composites, lithium iron manganese phosphate, and lithium iron manganese phosphate and carbon composites.

The inventors of the present application have found that when the positive electrode active material is at least one of lithium iron phosphate, lithium iron manganese phosphate, lithium manganese oxide, lithium cobalt oxide, lithium nickel cobalt manganese oxide, lithium nickel cobalt aluminum oxide, lithium nickel oxide or a mixture thereof, the addition of the polyether phosphate can better achieve the effects of improving the flexibility of the plate, increasing the maximum coating weight of the plate and the like.

In some embodiments, the positive electrode slurry has a gelling factor G ranging from 0 to 1, and optionally 0 to 0.3,

wherein G = (m1 - m2)/m1, and when G = 0 to 0.3, it is determined that the slurry is not gelled, and when G > 0.3, it is determined that it is gelled;

where m1 is the mass of the positive electrode slurry obtained after filtering 2 kg of an initial positive electrode slurry for 10 min with a 100-mesh filter screen,

and m2 is the mass of the positive electrode slurry obtained after filtering 2 kg of a positive electrode slurry that is left for 48 hours for 10 min with a 100-mesh filter screen, wherein,

the positive electrode slurry used in the measurement of m1 and the positive electrode slurry used in the measurement of m2 are the same batch of positive electrode slurry.

The closer the mass of the positive electrode slurry obtained by filtration after standing for 48 hours is to the initially obtained mass, the smaller the G value is, indicating that the slurry is less likely to gel and the slurry state is better. The gelling property of the positive electrode slurry described in the present application are very good.

A second aspect of the present application provides a positive electrode plate comprising

a positive electrode current collector; and

a positive electrode film layer on at least one surface of the positive electrode current collector, the positive electrode film layer comprising the positive electrode slurry described in the first aspect of the present application. As described above, by adding the polyether phosphate, the present application allows for an increase in coating weight on the positive electrode plate. This is also reflected in an increase in the maximum weight of the positive electrode film layer. In some embodiments, the mass of the positive electrode film layer per unit area plate ranges from 13 to 43 $mg/cm^2$, optionally 22 to 31 $mg/cm^2$, and more optionally 22 to 29 $mg/cm^2$, where the mass is the mass of the positive electrode film layer on a single surface of the plate. If there is a positive electrode film layer on both surfaces of the positive electrode plate, the mass range of the positive electrode film layer per unit area plate is twice the above range, that is, the mass range is 26 to 86 $mg/cm^2$, optionally 44 to 62 $mg/cm^2$, and more optionally 44 to 58 $mg/cm^2$, where the mass is the mass of the positive electrode film layer on both surfaces of the plate.

In some embodiments, after the polyether phosphate described in the present application is added, the maximum coating weight per unit area on the positive electrode plate can reach 41 $mg/cm^2$, and optionally, the maximum coating weight per unit area on the positive electrode plate can range from 23 to 41 $mg/cm^2$.

When the weight of the positive electrode film layer per unit area plate is too small, the uniformity of the plate is poor; and when the weight of the positive electrode film layer per unit area plate is too large, severe cracking will occur in the coating process of the plate, making it impossible to continue production. In the present application, the weight of the positive electrode film layer per unit area plate is limited to the above range, so as to ensure that the best effect can be achieved within this range.

The positive electrode current collector has two surfaces opposite in its own thickness direction, and the positive electrode film layer is provided on either or both of the two opposite surfaces of the positive electrode current collector.

In some embodiments, the positive electrode current collector can be a metal foil or a composite current collector. For example, as a metal foil, an aluminum foil can be used. The composite current collector may comprise a polymer material substrate and a metal layer formed on at least one surface of the polymer material substrate. The composite current collector can be formed by forming a metal material (aluminum, an aluminum alloy, nickel, a nickel alloy, titanium, a titanium alloy, silver and a silver alloy, etc.) on a polymer material substrate (such as polypropylene (PP), polyethylene terephthalate (PET), polybutylene terephthalate (PBT), polystyrene (PS), polyethylene (PE), etc.).

In the positive electrode plate, the mass content of the positive electrode active material in the positive electrode film layer is 90 to 97%, based on the positive electrode film layer. This content can be measured by EDS. When the mass content is too small, the prepared battery has low energy density, which cannot meet the battery capacity requirement; and when the mass content is too large, the binder and the conductive agent are insufficient, resulting in poor battery performance.

In the positive electrode plate, the mass content of the binder in the positive electrode film layer is 2 to 5%, based on the total mass of the positive electrode film layer. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin. Existing conventional positive electrode plates using a binder with a specific crystallinity or a similar crystallinity are brittle after coating and drying to form a film, and are prone to cracking under the action of stress, while the positive electrode plate of the present application using a binder also having this crystallinity does not crack.

In some embodiments, the positive electrode film layer also optionally comprises a conductive agent. As an example, the conductive agent may include at least one of superconducting carbon, acetylene black, carbon black, Ketjen black, carbon dots, carbon nanotubes, graphene, and carbon nanofibers.

In some embodiments, the positive electrode plate can be prepared as follows: dispersing the above-mentioned components for preparing the positive electrode plate, for example, positive electrode active material, conductive agent, binder and any other components, in a solvent (e.g. N-methylpyrrolidone) to form a positive electrode slurry; and coating a positive electrode current collector with the positive electrode slurry, followed by the procedures such as drying and cold pressing, so as to obtain the positive electrode plate.

The positive electrode plate described in the present application has very good flexibility, and the coating weight is significantly improved. The application of the positive electrode plate in a secondary battery, for example, directly adding into the positive electrode slurry during preparation, can significantly improve the energy density of the battery.

In some embodiments, the positive electrode film layer comprises two sublayers which are parallel to the positive

electrode current collector and overlap each other, wherein the ratio of the weight content of polyether phosphate in the sublayer closer to the positive electrode current collector (i.e., the sublayer close to the current collector) to the weight content of polyether phosphate in the sublayer farther from the positive electrode current collector (i.e., the sublayer far from the current collector) ranges from 0 to 60, and optionally 0.1 to 30.

In some embodiments, the ratio of the weight content of the polyether phosphate in the sublayer closer to the positive electrode current collector to the weight content of the polyether phosphate in the sublayer farther from the positive electrode current collector can be about 0.1, about 0.2, about 0.3, about 0.4, about 0.5, about 0.6, about 0.7, about 0.8, about 0.9, about 1, about 2, about 3, about 4, about 5, about 6, about 7, about 8, about 9, about 10, about 11, about 12, about 13, about 14, about 15, about 16, about 17, about 18, about 19, about 20, about 21, about 22, about 23, about 24, about 25, about 26, about 27, about 28, about 29, about 30, about 31, about 32, about 33, about 34, about 35, about 36, about 37, about 38, about 39, about 40, about 41, about 42, about 43, about 44, about 45, about 46, about 47, about 48, about 49, about 50, about 51, about 52, about 53, about 54, about 55, about 56, about 57, about 58, about 59, or about 60. Alternatively, the ratio of the weight content of the polyether phosphate in the sublayer closer to the positive electrode current collector to the weight content of the polyether phosphate in the sublayer farther from the positive electrode current collector is within any range composed of any of the above-mentioned values.

In some optional embodiments, in the sublayer close to the current collector, the weight ratio of the polyether phosphate to the positive electrode active material is 0 to 0.043; and in the sublayer far from the current collector, the weight ratio of the polyether phosphate to the positive electrode active material is 0.0006 to 0.004.

When the coating weight is above 23 $mg/cm^2$, multiple coating can reduce the material cost of the flexible additive compared to single thick coating, and also, the polyether phosphate of the present application can function better without affecting the electrical performance.

Optionally, when preparing the positive electrode film layer with two sublayers, two positive electrode slurries containing different amounts of polyether phosphate are first prepared, and then one slurry is coated onto the current collector and dried, after which another layer of slurry is coated and dried.

In some embodiments, in the case that the flexibility of the positive electrode plate is measured by winding needles,

when the diameter R of the winding needle ≤ 3.0 mm, the positive electrode plate does not crack, or
when the diameter R of the winding needle = 3.0 mm, the positive electrode plate cracks, but when the diameter R of the winding needle = 4.0 mm, the positive electrode plate does not crack.

In any embodiment, in the positive electrode plate according to the present application, when the flexibility of the positive electrode plate is measured by winding needles, a plate sample with a length and width of 50 mm x 100 mm is prepared and wound on special winding needles, and cracking of the plate is observed by a combination of visual inspection and a microscope. The flexibility grade is determined according to the following method:

with the diameter of the winding needle being R,
when R ≤ 3.0 mm, the plate does not crack, which is the first grade of flexibility;
when R = 3.0 mm, there are cracks and when R = 4.0 mm, there are no cracks, which is the second grade of flexibility;
when R = 4.0 mm, there are cracks and when R = 5.0 mm there are cracks, which is the third grade of flexibility;
when R = 5.0 mm, there are no cracks and when R = 6.0 mm, there are cracks, which is the fourth grade of flexibility; and
when R = 6.0 mm, there are no cracks and when R = 7.0 mm, there are cracks, which is the fifth grade of flexibility.

The preparation method of the winding needles is as follows:
the winding needles are obtained by cutting out 60 mm from 304 stainless steel rods with regular diameters of 3.0 mm, 4.0 mm, 5.0 mm, 6.0 mm, and 7.0 mm, respectively, and welding the same to a 150 mm x 300 mm steel plate for fixing.

The smaller diameter of the winding needle used and no cracking of the plate indicate that the flexibility of the plate is better, and on the contrary, the larger diameter of the winding needle used and cracking of the plate indicate that the flexibility of the plate is worse.

In the cold pressing process, the formed hydrogen bonds are destroyed and the flexible backbone is stretched. However, after the polyether phosphate described in the present application is added, the cold pressing pressure can be reduced, thereby reducing cracks and reducing the risk of belt breaking.

In some embodiments, the infiltration rate increase rate I of the positive electrode plate ranges from 2 to 20%, and optionally 6 to 15%,

wherein $I = (I2 - I1)/I1 \times 100\%$,
where I2 is the infiltration rate of the positive electrode plate in an electrolyte solution,

and I1 is the infiltration rate of the positive electrode plate without the polyether phosphate in the electrolyte solution, wherein the positive electrode plate used in the measurement of I1 is the same as the positive electrode plate used in the measurement of I2, except that the positive electrode plate used in the measurement of I1 does not comprise the polyether phosphate, while the positive electrode plate used in the measurement of I2 comprises the polyether phosphate.

The good infiltration property of the plate can achieve good infiltration and liquid retention of the electrolyte solution, so as to realize effective infiltration of the cell plate, avoid insufficient infiltration of the plate, and improve the efficiency of electrolyte injection in the cell and the infiltration property of the plate in the cycling process, thereby effectively improving the performance of battery products. The infiltration property of the positive electrode plate described in the present application in the electrolyte solution is very good.

A third aspect of the present application provides a secondary battery comprising the positive electrode plate according to the second aspect of the present application or prepared from the positive electrode slurry according to the first aspect of the present application. The energy density of the secondary battery described in the present application is significantly improved. In addition, the overall cost of materials is reduced in preparing the battery.

The secondary battery, battery module, battery pack, and power consuming device of the present application are described below.

Secondary battery

Typically, a secondary battery comprises a positive electrode plate, a negative electrode plate, an electrolyte and a separator. During the charge/discharge process of the battery, active ions are intercalated and de-intercalated back and forth between the positive electrode plate and the negative electrode plate. The electrolyte is located between the positive electrode plate and the negative electrode plate and functions for ionic conduction. The separator is provided between the positive electrode plate and the negative electrode plate, and mainly prevents the positive and negative electrodes from short-circuiting and enables ions to pass through.

[Positive electrode plate]

The positive electrode plate described in the second aspect of the present application or prepared from the positive electrode slurry described in the first aspect of the present application is used.

[Negative electrode plate]

The negative electrode plate comprises a negative electrode current collector and a negative electrode film layer provided on at least one surface of the negative electrode current collector, the negative electrode film layer comprising a negative electrode active material.

As an example, the negative electrode current collector has two surfaces opposite in its own thickness direction, and the negative electrode film layer is provided on either or both of the two opposite surfaces of the negative electrode current collector.

In some embodiments, the negative electrode current collector can be a metal foil or a composite current collector. For example, as a metal foil, a copper foil can be used. The composite current collector may comprise a polymer material substrate and a metal layer formed on at least one surface of the polymer material substrate. The composite current collector can be formed by forming a metal material (copper, a copper alloy, nickel, a nickel alloy, titanium, a titanium alloy, silver and a silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, the negative electrode active material can be a negative electrode active material known in the art for batteries. As an example, the negative electrode active material may include at least one of the following materials: artificial graphite, natural graphite, soft carbon, hard carbon, a phosphorus-based material, a tin-based material and lithium titanate, etc. The phosphorus-based material can be selected from at least one of elemental phosphorus, a phosphorus oxide compound, a phosphorus-carbon composite, a phosphorus-nitrogen composite, and a phosphorus alloy. The tin-based material may be selected from at least one of elemental tin, tin oxides, and tin alloys. However, the present application is not limited to these materials, and other conventional materials that can be used as negative electrode active materials for batteries can also be used. These negative electrode active materials may be used alone or in combination of two or more.

In some embodiments, the negative electrode film layer may optionally comprise a binder. The binder may be selected from at least one of a butadiene styrene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl

chitosan (CMCS).

In some embodiments, the negative electrode film layer may optionally comprise a conductive agent. The conductive agent may be selected from at least one of superconductive carbon, acetylene black, carbon black, ketjenblack, carbon dots, carbon nanotubes, graphene, and carbon nanofibers.

In some embodiments, the negative electrode film layer may optionally comprise other auxiliary agents, such as thickener (e.g. sodium carboxymethyl cellulose (CMC-Na)) and the like.

In some embodiments, the negative electrode plate can be prepared as follows: dispersing the above-mentioned components for preparing the negative electrode plate, such as negative electrode active material, conductive agent, binder and any other components, in a solvent (e.g. deionized water) to form a negative electrode slurry; and coating a negative electrode current collector with the negative electrode slurry, followed by procedures such as drying and cold pressing, so as to obtain the negative electrode plate.

[Electrolyte]

The electrolyte is located between the positive electrode plate and the negative electrode plate and functions for ionic conduction. The type of the electrolyte is not specifically limited in the present application, and can be selected according to actual requirements. For example, the electrolyte may be selected from at least one of solid electrolyte and liquid electrolyte (i.e., electrolyte solution).

In some embodiments, an electrolyte solution is used as the electrolyte. The electrolyte solution comprises an electrolyte salt and a solvent.

In some embodiments, the electrolyte salt may be selected from one or more of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bisfluorosulfonimide (LiFSI), lithium bistrifluoromethanesulfonimide (LiTFSI), lithium trifluoromethanesulfonate (LiTFS), lithium difluorooxalate borate (LiDFOB), lithium dioxalate borate (LiBOB), lithium difluorophosphate ($LiPO_2F_2$), lithium bisoxalatodifluorophosphate (LiDFOP) and lithium tetrafluorooxalate phosphate (LiTFOP).

In some embodiments, the solvent may be selected from one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate ( EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS) and diethyl sulfone (ESE).

In some embodiments, the electrolyte solution may optionally comprise an additive. For example, the additive may include a negative electrode film-forming additive, a positive electrode film-forming additive, and also an additive that can improve certain performance of the battery, such as an additive to improve the overcharge performance of a battery, an additive to improve the high temperature performance of a battery, and an additive to improve the low temperature performance of a battery, etc.

[Separator]

In some embodiments, the secondary battery further comprises a separator. The separator is provided between the positive electrode plate and the negative electrode plate, and functions for separation. The type of the separator is not particularly limited in the present application, and any well known porous-structure separator with good chemical stability and mechanical stability may be selected.

In some embodiments, the material of the separator may be selected from at least one of glass fibers, non-woven fabrics, polyethylene, polypropylene and polyvinylidene fluoride. The separator may be a single-layer film and also a multi-layer composite film, and is not limited particularly. When the separator is a multi-layer composite film, the materials in the respective layers may be same or different, which is not limited particularly.

[Outer package]

In some embodiments, the secondary battery may comprise an outer package for encapsulating the positive electrode plate, the negative electrode plate and the electrolyte. As an example, the positive electrode plate, the negative electrode plate and the separator may be laminated or wound to form a laminated or wrapped-structure cell, which is encapsulated within the outer package; and the electrolyte may be an electrolyte solution which is infiltrated into the cell. The number of the cells in the secondary battery may be one or more, and can be adjusted according to the requirements.

In one embodiment, the present application provides an electrode assembly. In some embodiments, the positive electrode plate, the negative electrode plate and the separator can be made into the electrode assembly by a winding

process or a lamination process. The outer package can be used to encapsulate the above-mentioned electrode assembly and electrolyte.

In some embodiments, the outer package of the secondary battery may be a soft bag, such as a pouch-type soft bag. The material of the soft bag can be a plastic, for example, comprising one or more of polypropylene (PP), polybutylene terephthalate (PBT), polybutylene succinate (PBS), etc. In some embodiments, the outer package of the secondary battery can be a hard shell, for example, a hard plastic shell, an aluminum shell, a steel shell, etc.

Preparation method of secondary battery

In one embodiment, the present application provides a preparation method of a secondary battery, wherein a negative electrode plate described in the present application or a negative electrode plate prepared according to the method described in the present application is used.

The preparation of a secondary battery may further comprise the step of assembling the negative electrode plate, a positive electrode plate and an electrolyte into a secondary battery. In some embodiments, the positive electrode plate, the separator, and the negative electrode plate can be wound or laminated in order, such that the separator is located between the positive electrode plate and the negative electrode plate and functions for isolation to obtain a cell. The cell is placed in an outer package, and an electrolyte solution is injected, and the outer package is sealed to obtain a secondary battery.

In some embodiments, the preparation of a secondary battery may further comprise the step of preparing a positive electrode plate. As an example, a positive electrode active material, a conductive agent and a binder can be dispersed into a solvent (e.g., N-methylpyrrolidone, NMP) to form a uniform positive electrode slurry; and the positive electrode slurry is coated onto a positive electrode current collector, and is then subjected to procedures such as drying and cold pressing, so as to obtain the positive electrode plate.

In some embodiments, the preparation of a secondary battery comprises the step of preparing a negative electrode plate according to the method described in the present application.

The shape of the secondary battery is not particularly limited in the present application, and may be cylindrical, square or of any other shape.

In some embodiments, the present application provides a power consuming device, a battery module, or a battery pack, wherein the power consuming device, the battery module, or the battery pack includes a secondary battery as described in the present application or a secondary battery prepared according to the method described in the present application.

In some embodiments, the secondary battery can be assembled into a battery module, and the number of the secondary batteries contained in the battery module may be one or more, and the specific number can be selected by those skilled in the art according to the application and capacity of the battery module.

In some embodiments, the above battery module may also be assembled into a battery pack, the number of the battery modules contained in the battery pack may be one or more, and the specific number can be selected by those skilled in the art according to the application and capacity of the battery pack.

In addition, the present application further provides a power consuming device. The power consuming device comprises at least one of the secondary battery, battery module, or battery pack provided by the present application. The secondary battery, battery module or battery pack can be used as a power source of the power consuming device or as an energy storage unit of the power consuming device. The power consuming device may include a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf cart, an electric truck), an electric train, ship, and satellite, an energy storage system, and the like, but is not limited thereto. As another example, the device may be a mobile phone, a tablet computer, a laptop computer, etc. The device is generally required to be thin and light, and may use a secondary battery as a power source. As for the power consuming device, the secondary battery, battery module or battery pack can be selected according to the usage requirements thereof.

Therefore, the present application provides a battery module comprising the secondary battery described in the present application.

In addition, the present application further provides a battery pack comprising the above battery module.

The present application further provides a power consuming device comprising at least one of the secondary battery, the battery module, or the battery pack described in the present application.

**Examples**

The present application will be described in detail below by means of examples, which are non-limiting.

1. Preparation of polyether phosphate

Step 1: A polyether was generated from a precursor 1, a precursor 2, and a precursor 3 (see Table 1 for specific types and amounts) under an alkaline condition, and the reaction was stopped as the number average molecular weight of the polyether reached 2w (i.e., 20,000); and

Step 2: the polyether prepared in step (1) was reacted with a phosphating agent (phosphorus pentoxide) (see Table 1 for specific amounts) to generate a polyether phosphate, and after the reaction was completed, filtration and dialysis were performed to obtain a polyether phosphate with a number average molecular weight cut-off of 2w-3w (i.e., 20000-30000).

2. Preparation of positive electrode slurry

A positive electrode active material (lithium iron phosphate), a conductive agent (conductive carbon black Super P), and a binder PVDF (see Table 2 for specific amounts) were mixed for 30 min. The resulting mixture was then added into NMP and stirred for 180 min to disperse uniformly. Finally, the polyether phosphate prepared in step 1 was added, and the mixture was fully stirred for 60 min to form a uniform positive electrode slurry.

3. Preparation of positive electrode plate

The positive electrode slurry was applied to the surface of an aluminum foil of a positive electrode current collector, followed by drying and cold pressing, to obtain a positive electrode plate. Through a series of performance tests for the positive electrode plate (mainly to (1) test whether the plate cracks during coating, (2) test whether it breaks after cold pressing, and (3) perform the flexibility test method for the positive electrode plate described herein, where the maximum coating weight of a plate with a flexibility of the second grade or less that does not crack during coating and that does not break after cold pressing is the maximum coating weight per unit area), the maximum coating weight per unit area is 41 $mg/cm^2$.

4. Preparation of negative electrode plate

A negative electrode active material (graphite), a conductive agent (Super P), a binder (SBR), and a thickener (CMC) were fully stirred and mixed in an appropriate amount of deionized water in a mass ratio of 96.2 : 0.8 : 1.8 : 1.2 to form a uniform negative electrode slurry. The negative electrode slurry was applied to both surfaces of a copper foil of a negative electrode current collector, followed by drying and cold pressing, to obtain a negative electrode plate.

5. Preparation of electrolyte

Ethylene carbonate (EC), ethyl methyl carbonate (EMC), and diethyl carbonate (DEC) were mixed in a volume ratio of 1 : 1 : 1, and then $LiPF_6$ was uniformly dissolved in the above solution to obtain an electrolyte solution, where the concentration of $LiPF_6$ was 1 mol/L.

6. Separator

A polyethylene (PE) film was used.

7. Preparation of secondary battery

The above positive electrode plate, separator, and negative electrode plate were laminated in order, followed by winding, to obtain an electrode assembly, and the electrode assembly was put into an outer package and the above electrolyte solution was added in, followed by processes such as encapsulating, standing, forming, and aging, to obtain a secondary battery of Example 1. The outer package was selected as a hard-shell housing with a length*width*height = 148 mm*28.5 mm*97.5 mm.

## Examples 2 to 19 and Comparative Example 1

The process was similar to that of Example 1, except that the raw materials and amounts as shown in Table 1 and Table 2 were used and that the respective number average molecular weights of polyether phosphate as shown

in Table 5 and Table 6 were selected during preparation, where no polyether phosphate was used in Comparative Example 1.

**Example 21**

The preparation processes of steps 1 and 4 to 7 followed those of Example 1, the cut-off number average molecular weight range of polyether phosphate was shown in Table 8, and the preparation processes of steps 2 and 3 were changed as follows:

Step 2: Preparation of positive electrode slurry

3124.9 g of a positive electrode active material (lithium iron phosphate), 32.5 g of a conductive agent (Super P), and 81.25 g of a binder PVDF were mixed for 30 min. The resulting mixture was then added to 1750 g of a NMP solvent and stirred for 180 min for uniform dispersion. Finally, 11.38 g of the polyether phosphate prepared in step 1 was added, and the mixture was fully stirred for 60 min to form a uniform positive electrode slurry 1.
3134.6 g of a positive electrode active material (lithium iron phosphate), 32.5 g of a conductive agent (Super P), and 81.25 g of a binder PVDF were mixed for 30 min. The resulting mixture was then added to 1750 g of a NMP solvent and stirred for 180 min for uniform dispersion. Finally, 1.63 g of the polyether phosphate prepared in step 1 was added, and the mixture was fully stirred for 60 min to form a uniform positive electrode slurry 2.

Step 3: Preparation of positive electrode plate

The positive electrode slurry 1 in step 2 was applied to the surface of an aluminum foil of a positive electrode current collector, and after drying, the positive electrode slurry 2 was applied to the surface of the dried slurry 1, where the coating thicknesses of the positive electrode slurry 1 and the positive electrode slurry 2 were kept the same. Through a series of performance tests for the positive electrode plate (mainly to test whether the plate cracks during coating and whether it breaks after cold pressing, where with reference to the flexibility test method for the positive electrode plate described herein, the maximum coating weight of a plate with a flexibility of the second grade or less that does not crack during coating and that does not break after cold pressing is the maximum coating weight per unit area), the total coating weight per unit area is 41 mg/cm$^2$.

**Example 20**

The difference from Example 21 was that the positive electrode slurry 1 did not contain polyether phosphate, and other preparation processes were similar to those of Example 21. For specific method parameters, see Table 1 and Table 3, and the cut-off number average molecular weight range is shown in Table 7.

**Examples 22 to 26**

The preparation process was similar to that of Example 21, except that the raw materials and amounts shown in Table 1 and Table 3 were used and the cut-off number average molecular weights shown in Table 8 were selected.
In the present application, the positive electrode slurry was applied to both surfaces of the positive electrode current collector in the positive electrode plate in all Examples and Comparative Examples, namely, by double-sided coating.

Table 1: Raw materials and amounts used in the preparation of polyether phosphate

| Preparati on Example | Precur sor 1 | Gra ms used | Precurso r 2 | Gra ms used | Precursor 3 | Gra ms used | Phosphat ing agent | Gra ms used |
|---|---|---|---|---|---|---|---|---|
| Example 1 | Ethyle ne oxide | 8800 | Propyle ne oxide | 1160 0 | Styrene oxide | 6000 | Phosphor us pentoxid e | 4258 . 2 |
| Example 2 | Epiflu orohyd rin | 1520 0 | Ethyl glycidyl ether | 2040 0 | ±-(4-fluorophenyl)e thylene oxide | 6900 | Phosphor us pentoxid e | 4258 . 2 |

(continued)

| Preparati on Example | Precur sor 1 | Gra ms used | Precurso r 2 | Gra ms used | Precursor 3 | Gra ms used | Phosphat ing agent | Gra ms used |
|---|---|---|---|---|---|---|---|---|
| Example 3 | Ethyle ne oxide | 2200 | Propyle ne oxide | 2900 | Styrene oxide | 6000 | Phosphor us pentoxid e | 1419 . 4 |
| Example 4 | Ethyle ne oxide | 1320 0 | Propyle ne oxide | 2320 0 | Styrene oxide | 2760 0 | Phosphor us pentoxid e | 9935 . 8 |
| Example 5 | Ethyle ne oxide | 1320 0 | Propyle ne oxide | 2900 0 | Styrene oxide | 1200 0 | Phosphor us pentoxid e | 8516 . 4 |
| Example 6 | Ethyle ne oxide | 880 | Propyle ne oxide | 870 | Styrene oxide | 2400 | Phosphor us pentoxid e | 709. 7 |
| Example 7 | Ethyle ne oxide | 8800 | Propyle ne oxide | 3480 0 | Styrene oxide | 3600 0 | Phosphor us pentoxid e | 1277 4.6 |
| Example 8 | Ethyle ne oxide | 1232 0 | Propyle ne oxide | 5800 | Styrene oxide | 4800 | Phosphor us pentoxid e | 4258 . 2 |
| Example 9 | Ethyle ne oxide | 4620 | Propyle ne oxide | 6090 | Styrene oxide | 1260 0 | Phosphor us pentoxid e | 4258 . 2 |
| Example 10 | Ethyle ne oxide | 1760 | Propyle ne oxide | 2320 | Styrene oxide | 2040 0 | Phosphor us pentoxid e | 4258 . 2 |
| Example 11 | Ethyle ne oxide | 0 | Propyle ne oxide | 1218 0 | Styrene oxide | 1320 0 | Phosphor us pentoxid e | 4258 . 2 |
| Example 12 | Ethyle ne oxide | 1232 0 | Propyle ne oxide | 0 | Styrene oxide | 1200 0 | Phosphor us pentoxid e | 4258 . 2 |

The precursors 1 to 3 and the phosphating agent used in Examples 13 to 26 were the same as those in Example 1.

Table 2: Materials and amounts used in the preparation of positive electrode slurry

| Preparation Example | Positive electrode active material | Grams used | Grams of polyether phosphate used |
|---|---|---|---|
| Example 1 | Lithium iron phosphate | 3123.25 | 13.00 |
| Example 13 | Lithium iron phosphate | 3134.63 | 1.63 |
| Example 14 | Lithium iron phosphate | 3038.75 | 97.50 |
| Example 15 | Lithium iron phosphate | 3133.00 | 3.25 |
| Example 16 | Lithium iron phosphate | 3071.25 | 65.00 |
| Example 17 | Lithium iron phosphate | 3113.50 | 22.75 |
| Example 18 | Lithium iron phosphate | 3135.60 | 0.65 |
| Example 19 | Lithium iron phosphate | 2973.75 | 162.50 |

In Table 2, in Examples 1 and 13 to 19, 1750 g of the solvent NMP, 32.5 g of the conductive carbon super P and 81.25 g of the binder PVDF were used. In Examples 2 to 12, the amount of each material used for preparing the positive electrode slurry was the same as that in Example 1.

Table 3: Materials and amounts used for each sublayer in the preparation of a positive electrode slurry comprising a double-layer positive electrode film layer

| Preparation Example | Number of layers of the positive electrode film layer on one surface of the current collector | Positive electrode active material | Grams used | Grams of polyether phosphate used |
|---|---|---|---|---|
| Example 1 | Single layer | Lithium iron phosphate | 3123.3 | 13.00 |
| Example 20 | Closer sublayer | Lithium iron phosphate | 3136.3 | 0.00 |
| | Farther sublayer | Lithium iron phosphate | 3123.3 | 13.00 |
| Example 21 | Closer sublayer | Lithium iron phosphate | 3124.9 | 11.38 |
| | Farther sublayer | Lithium iron phosphate | 3134.6 | 1.63 |
| Example 22 | Closer sublayer | Lithium iron phosphate | 3129.4 | 6.83 |
| | Farther sublayer | Lithium iron phosphate | 3130.1 | 6.18 |
| Example 23 | Closer sublayer | Lithium iron phosphate | 3134.6 | 1.63 |
| | Farther sublayer | Lithium iron phosphate | 3124.9 | 11.38 |
| Example 24 | Closer sublayer | Lithium iron phosphate | 3042.0 | 94.25 |
| | Farther sublayer | Lithium iron phosphate | 3133.0 | 3.25 |
| Example 25 | Closer sublayer | Lithium iron phosphate | 3040.4 | 95.88 |
| | Farther sublayer | Lithium iron phosphate | 3134.6 | 1.63 |
| Example 26 | Closer sublayer | Lithium iron phosphate | 3008.0 | 128.21 |
| | Farther sublayer | Lithium iron phosphate | 3134.5 | 1.79 |

## IV. Performance evaluation of the positive electrode slurry and positive electrode plate of the present application

### Testing of slurry parameters:

### 1. Gelling factor of positive electrode slurry

The gelling state of the positive electrode slurry was evaluated by the following method:

The gelling factor of the positive electrode slurry is expressed as G, and $G = |(m2 - m1)/m1|$,

where

m1 is the mass of the positive electrode slurry obtained after filtering 2 kg of an initial positive electrode slurry for 10 min with a 200-mesh filter screen,

and m2 is the mass of the positive electrode slurry obtained after filtering 2 kg of a positive electrode slurry that is left for 48 hours for 10 min with a 200-mesh filter screen, wherein,

the positive electrode slurry used in the measurement of m1 and the positive electrode slurry used in the measurement of m2 are the same batch of positive electrode slurry.

G within the range of 0 to 0.3 is determined as not gelled; and G > 0.3 is determined as gelled.

## Testing for parameters of positive electrode plate

### 1. Testing for flexibility of positive electrode plate

The flexibility of the positive electrode plate is evaluated by winding needles, and the test method is as follows: a plate sample with a length and width of 50 mm x 100 mm is prepared and wound on special winding needles, and cracking of the plate is observed by a combination of visual inspection and a microscope.

Special winding needles:
the winding needles are obtained by cutting out 60 mm from 304 stainless steel rods with regular diameters of 2.0 mm, 3.0 mm, 4.0 mm, 5.0 mm, 6.0 mm, and 7.0 mm, respectively, and welding the same to a 150 mm x 300 mm steel plate for fixing, as shown in FIG. 5.

The flexibility grade is determined according to the following method:

with the diameter of the winding needle being R,
when $R \leq 3.0$ mm, the plate does not crack, which is the first grade of flexibility;
when R = 3.0 mm, there are cracks and when R = 4.0 mm, there are no cracks, which is the second grade of flexibility;
when R = 4.0 mm, there are cracks and when R = 5.0 mm there are cracks, which is the third grade of flexibility;
when R = 5.0 mm, there are no cracks and when R = 6.0 mm, there are cracks, which is the fourth grade of flexibility; and
when R = 6.0 mm, there are no cracks and when R = 7.0 mm, there are cracks, which is the fifth grade of flexibility.

### 2. Infiltration rate increase rate of positive electrode plate

The infiltration rate increase rate of the positive electrode plate is expressed as I, and $I = (I2 - I1)/I1 \times 100\%$, where

I2 is the infiltration rate of the positive electrode plate in an electrolyte solution,
and I1 is the infiltration rate of the positive electrode plate without the polyether phosphate in the electrolyte solution, wherein the positive electrode plate used in the measurement of I1 is the same as the positive electrode plate used in the measurement of I2, except that the positive electrode plate used in the measurement of I1 does not comprise the polyether phosphate, while the positive electrode plate used in the measurement of I2 comprises the polyether phosphate.

The determination process of I1 and I2 is as follows:

the capillary tube method is used to test the electrolyte uptake of the plate. A plate with a size of > 50 mm*50 mm is prepared, where the surface is flat without wrinkles, and there are no film peeling and powder dropping; and a capillary tube with an inner diameter of d = 100 um is selected and sanded with a sandpaper until the port is neat, and the electrolyte solution is absorbed with the capillary tube at h = 5 mm, where the height of the electrolyte solution is controlled at 5 mm. Then the capillary tube is placed under the microscope and is made to contact with the plate, and the time is recorded with a stopwatch while the liquid level in the capillary tube is dropping. When the dropping of the liquid level is finished, the duration of the liquid washing is read out and recorded as data t, and the infiltration rate of the electrolyte solution is equal to

$$\pi \times (d/2)^2 \times h \times \rho/t,$$

where $\pi$ is 3.14 and $\rho$ is the density of electrolyte solution.

**3. Determination of coating weight per unit area**

A blank aluminum foil and a positive electrode plate that has been dried in the coating process (the positive electrode current collector of this positive electrode plate is coated on both surfaces) are prepared, and 15 small discs with an area of 1540.25 $mm^2$ are punched out respectively. The average mass of small discs of the blank aluminum foil is subtracted from the average mass of small discs of the plate, divided by 2, to obtain the coating weight per unit area. The "single surface" refers to coating on only one surface of the current collector, and is not the same concept as the number of layers of the "sublayer" described in the present application. The maximum coating weight per unit area in the tables refers to the single-surface weight.

The data of coating weight of the examples in the tables of the present application all refer to data of the maximum coating weight per unit area of single surface, and the performance of the plate and the performance of the battery are both measured under the maximum coating weight.

The maximum coating weight per unit area refers to the maximum coating weight of a plate with a flexibility of the second grade or less that does not crack during coating and that does not break after cold pressing, after (1) testing whether the plate cracks in the coating process, (2) testing whether it breaks during cold pressing, and (3) performing the flexibility test for the positive electrode plate described in the present application.

**Performance tests for battery**

**1. Determination of energy density**

The batteries prepared in Examples and Comparative Examples were weighed to obtain the mass of the entire battery; and after formation capacity of the battery, it is allowed to stand at 25°C for 10 min, charged at 0.33C to 100% SOC, depolarized with a small current, allowed to stand for 10 min, and discharged at 0.33 to 0% SOC, and the obtained capacity is the capacity of the battery at 0.33C. After standing for 30 min, the battery is charged to 100% SOC, allowed to stand for 30 min, and discharged with a constant current of 0.01C for 30 min, where the voltage has a stable process, and this stable value is the charge-discharge platform, thereby obtaining the platform voltage; and finally, the weight energy density of the battery is calculated, namely, mass energy density of battery = battery capacity x discharge platform voltage/weight of the entire battery, with a basic unit of Wh/kg (watt-hour/kg).

**2. Determination of direct current resistance (DCR)**

The battery is tested for capacity at 25°C, and the capacity test method is as above. It is then charged at a constant voltage of 0.05C, allowed to stand for 60 min, discharged at 0.33C to 50% SOC, allowed to stand for 60 min, discharged at 0.33C to 20% SOC, allowed to stand for 60 min, and discharged at 0.33C to 0% SOC. Then, the open circuit voltage of 0% SOC is measured and the DCR data for 30s is summarized.

See Tables 4 to 7 for the measurement results, where "/" in the tables represents that this item is absent, not added or undetectable.

In Tables 4 to 7, "(I)/(II)/(III)/(IV)" represents molar amount of structural unit (I)/molar amount of structural unit (II)/molar amount of structural unit (3)/molar amount of structural unit (IV), where the molar amount of structural unit (I) corresponds to the molar amount of precursor 1 in each Example; and the molar amount of the structural unit (II) corresponds to the molar amount of the precursor 2 in each Example; and the molar amount of the structural unit (3) corresponds to the molar amount of the precursor 3 in each Example; and the molar amount of the structural unit (IV) corresponds to the molar amount of the phosphate group in each Example.

Table 4. Comparison between adding polyether phosphate and not adding polyether phosphate

| No. | | Example 1 | Example 2 | Comparative Example 1 |
|---|---|---|---|---|
| Polyether phosphate | A/B/E | Hydrogen/Methyl/ Phenyl | Fluorine/Methoxv/ Fluorophenyl | / |
| | (I)/(II)/(III)/(IV) | 200/200/50/30 | 200/200/50/30 | / |
| | Number average molecular weight | 2w-3w | 3w-4w | / |
| Positive electrode slurry | Weight ratio of polyether phosphate to positive electrode active material | 0.004 | 0.004 | / |
| | Gelling factor G | 0.15 | 0.15 | 0.5 |
| Positive electrode plate | Number of layers of the positive electrode film layer | Single layer | Single layer | Single layer |
| | Winding needle diameter R/mm | ≤3 | 3 | 6 |
| | Maximum coating weight per unit area (mg/cm$^2$) | 29 | 29 | 22 |
| | Infiltration rate increase rate I | 10% | 8% | / |
| Battery | Energy density (in Wh/kg) | 195 | 195 | 187 |
| | DCR (mΩ) | 2.0 | 2.6 | 3.0 |

It can be seen from Table 4 that, compared with Comparative Example 1, after polyether phosphate is added into the positive electrode slurry in the Examples, the coating weight per unit area is increased by 24%, and the energy density is increased by 4%, such that the battery performance is significantly improved.

Table 5. Investigation on molar proportion and molecular weight of each component

| No. | | Example 1 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|
| Polyether phosphate | A/B/E | Hydrogen/Methyl/Phenyl | Hydrogen/Methyl/Phenyl | Hydrogen/Methyl/Phenyl | Hydrogen/Methyl/Phenyl | Hydrogen/Methyl/Phenyl | Hydrogen/Methyl/Phenyl | Hydrogen/Methyl/Phenyl | Hydrogen/Methyl/Phenyl | Hydrogen/Methyl/Phenyl | Hydrogen/Methyl/Phenyl | Hydrogen/Methyl/Phenyl |
| | (I)/(II)/(III)/( IV) | 200/200/50/30 | 50/50/50/10 | 300/400/230/70 | 300/500/100/60 | 20/15/20/5 | 200/600/300/90 | 280/100/40130 | 105/105/105/30 | 40/40/170/30 | 0/210/110/30 | 280/0/100/30 |
| | Number average molecular weight | 2w-3w | 1w-2w | 6w-7w | 5w-6w | <1w | >9w | 2w-3w | 2w-3w | 2w-3w | 2w-3w | 2w-3w |
| Positive electrode slurry | Weight ratio of polyether phosphate to positive electrode active material | 0.004 | 0.004 | 0.004 | 0.004 | 0.004 | 0.004 | 0.004 | 0.004 | 0.004 | 0.004 | 0.004 |
| | Gelling factor G | 0.15 | 0.17 | 0.3 | 0.3 | 0.5 | 1.5 | 0.18 | 0.2 | 0.15 | 0.25 | 0.19 |
| Positive electrode plate | Number of layers of the positive electrode film layer | Single layer | Single layer | Single layer | Single layer | Single layer | Single layer | Single layer | Single layer | Single layer | Single layer | Single layer |
| | Winding needle diameter R/mm | ≤3 | 3 | ≤3 | ≤3 | 6 | 4 | 3 | 3 | ≤3 | 3 | ≤ 3 |
| | Maximum coating weight per unit area ($mg/cm^2$) | 29 | 28 | 30 | 30 | 22 | 29 | 30 | 28 | 29 | 28 | 29 |

(continued)

| No. | | Example 1 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|
| | Infiltration rate increase rate I | 10% | 9% | 11% | 12% | 0% | 1% | 7% | 9% | 10% | 8% | 10% |
| Battery | Energy density (in Wh/kg) | 195 | 193 | 196 | 196 | 184 | 195 | 196 | 193 | 195 | 193 | 195 |
| | DCR (mΩ) | 2.0 | 2.3 | 4.5 | 4.0 | 3.5 | 10.0 | 15.0 | 2.5 | 2.7 | 2.0 | 2.2 |

As can be seen from Table 5, the molecular weight of the polyether phosphate affects the coating weight per unit area and the energy density of the battery. When the molecular weight is too small, the stability of the positive electrode slurry is poor, thus the phenomenon of physical gelling is likely to occur, and the flexibility of the positive electrode plate is not significantly improved, thus there is still the phenomenon of cracking during coating; and when the molecular weight is too large, there are more non-conductive polymers in the slurry, thus cross-linking between the polymers is likely to occur, leading to gelling of the slurry, which affects the film plate resistance of the plate.

Table 6. Investigation on the weight proportion of polyether phosphate

| No. | | Example 1 | Example 13 | Example 14 | Example 15 | Example 16 | Example 17 | Example 18 | Example 19 |
|---|---|---|---|---|---|---|---|---|---|
| Polyether phosphate | A/B/E | Hydrogen/ Methyl/Phe nvl | Hydrogen/ Methyl/Phe nvl | Hydrogen/ Methyl/Phe nvl | Hydrogen/ Methyl/Phe nvl | Hydrogen/ Methyl/Phe nvl | Hydrogen/ Methyl/Phe nvl | Hydrogen/ Methyl/Phe nvl | Hydrogen/ Methyl/Phe nvl |
| | (I)/(II)/(III)/(IV ) | 200/200/50 /30 | 200/200/50 /30 | 200/200/50 /30 | 200/200/50 /30 | 200/200/50 /30 | 200/200/50 /30 | 200/200/50 /30 | 200/200/50 /30 |
| | Number average molecular weight | 2w-3w | 2w-3w | 2w-3w | 2w-3w | 2w-3w | 2w-3w | 2w-3w | 2w-3w |
| Positive electrode slurry | Weight ratio of polyether phosphate to positive electrode active material | 0.004 | 0.0005 | 0.03 | 0.01 | 0.02 | 0.007 | 0.0002 | 0.05 |
| | Gelling factor G | 0.15 | 0.2 | 0.3 | 0.16 | 0.28 | 0.17 | 0.3 | 1.0 |
| Positive electrode plate | Number of layers of the positive electrode film layer | Single layer | Single layer | Single layer | Single layer | Single layer | Single layer | Single layer | Single layer |
| | Winding needle diameter R/mm | ≤ 3 | 3 | ≤ 3 | ≤ 3 | ≤ 3 | ≤ 3 | 6 | 3 |
| | Maximum coating weight per unit area (mg/cm$^2$) | 29 | 28 | 30 | 29 | 30 | 29 | 29 | 29 |
| | Infiltration rate increase rate I | 10% | 5% | 12% | 11% | 10% | 9% | 0% | 10% |
| Battery | Energy density (in Wh/kg) | 195 | 193 | 196 | 195 | 196 | 195 | 195 | 195 |
| | DCR (mΩ) | 2.0 | 2.1 | 3.5 | 2.2 | 3.0 | 2.3 | 7.0 | 12.0 |

It can be seen from Table 6 that the weight ratio of polyether phosphate to positive electrode active material affects the coating weight per unit area of the plate, and when the weight ratio of polyether phosphate to positive electrode active material is < 0.0005 (Example 18), the positive electrode plate cracks at high coating weight, and the energy density of the corresponding battery is low; and when the weight ratio of polyether phosphate to positive electrode active material is > 0.03 (Example 19), the film plate resistance of the plate deteriorates, and the resistance DCR of the battery is very high, thereby greatly affecting the rate performance of the battery.

Table 7. Comparison between single-layer positive electrode film layer and double-layer positive electrode film layer

| No. | | Example 1 | Example 20 | Example 21 | Example 22 | Example 23 | Example 24 | Example 25 | Example 26 |
|---|---|---|---|---|---|---|---|---|---|
| Polyether phosphate | A/B/E | Hydrogen/ Methyl/Phenyl | Hydrogen/ Methyl/Phenyl | Hydrogen/ Methyl/Phenyl | Hydrogen/ Methyl/Phenyl | Hydrogen/ Methyl/Phenyl | Hydrogen/ Methyl/Phenyl | Hydrogen/ Methyl/Phenyl | Hydrogen/ Methyl/Phenyl |
| | (I)/(II)/(III)/(IV ) | 200/200/50 130 | 200/200/50 /30 | 200/200/50 130 | 200/200/50 /30 | 200/200/50 /30 | 200/200/50 130 | 200/200/50 /30 | 200/200/50 130 |
| | Number average molecular weight | 2w-3w | 2w-3w | 2w-3w | 2w-3w | 2w-3w | 2w-3w | 2w-3w | 2w-3w |
| Positive electrode slurry | Weight ratio of polyether phosphate to positive electrode active material in the sublayer close to the current collector | / | 0 | 0.004 | 0.002 | 0.0005 | 0.031 | 0.032 | 0.043 |
| | Weight ratio of polyether phosphate to positive electrode active material in the sublayer far from the current collector | / | 0.004 | 0.0005 | 0.002 | 0.004 | 0.001 | 0.0005 | 0.0006 |
| | Gelling factor G of the positive electrode slurry close to the current collector | 0.15 | 0.3 | 0.15 | 0.16 | 0.2 | 0.3 | 0.3 | 0.7 |
| | Gelling factor G of the positive electrode slurry far from the current collector | | 0.15 | 0.2 | 0.16 | 0.15 | 0.16 | 0.2 | 0.2 |

(continued)

| No. | | Example 1 | Example 20 | Example 21 | Example 22 | Example 23 | Example 24 | Example 25 | Example 26 |
|---|---|---|---|---|---|---|---|---|---|
| Positive electrode plate | Number of layers of the positive electrode film layer | Single layer | Two sublayers | Two sublayers | Two sublayers | Two sublayers | Two sublayers | Two sublayers | Two sublayers |
| | Weight ratio of polyether phosphate between two layers (close/far) | / | 0 | 6.98 | 1.11 | 0.14 | 29.00 | 58.82 | 71.63 |
| | Winding needle diameter R/mm | ≤ 3 | ≤ 3 | ≤ 3 | 3 | ≤ 3 | 3 | ≤ 3 | 3 |
| | Maximum coating weight per unit area (mg/cm$^2$) | 29 | 39 | 41 | 40 | 41 | 40 | 39 | 40 |
| | Infiltration rate increase rate I | 10% | 11% | 12% | 10% | 12% | 9% | 11% | 8% |
| Battery | Energy density (in Wh/kg) | 195 | 211 | 215 | 213 | 215 | 213 | 211 | 213 |
| | DCR (Ω) | 2.0 | 2.4 | 3.0 | 2.8 | 3.0 | 5.0 | 5.2 | 10.0 |

As can be seen from Table 7, under the premise that the coating weight per unit area is substantially the same in the Examples, the energy density of the battery corresponding to the positive electrode plate with two sublayers is relatively high; and further, the ratio of the weight content of the polyether phosphate in the sublayer closer to the positive electrode current collector to the weight content of the polyether phosphate in the sublayer farther from the positive electrode current collector ranges from 0 to 60, and when the ratio is > 60 (Example 26), the stability of the slurry and the film plate resistance of the plate are affected, thus the DCR of the cell is large.

It should be noted that the present application is not limited to the above embodiments. The above embodiments are exemplary only, and any embodiment that has substantially same constitutions as the technical ideas and has the same effects within the scope of the technical solution of the present application falls within the technical scope of the present application. In addition, without departing from the gist of the present application, various modifications that can be conceived by those skilled in the art to the embodiments, and other modes constructed by combining some of the constituent elements of the embodiments also fall within the scope of the present application.

## Claims

1. A positive electrode slurry comprising a positive electrode active material and a polyether phosphate,

   wherein the polyether phosphate comprises at least the following structural units:

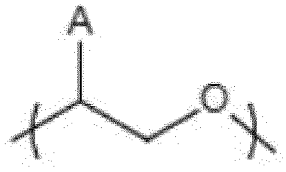

(I)

,

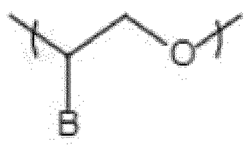

(II)

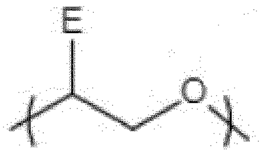

(III)

,

   and a structural unit (IV) that is a phosphate group,
   wherein,
   A is hydrogen, halogen or haloalkyl, wherein the halogen optionally is fluorine, chlorine or bromine; and optionally, A is hydrogen or fluoromethyl;
   B is hydroxyl, R, OR, or ROR', wherein the R and R' are each independently a linear or branched alkyl group containing 1 to 8 carbons; and optionally, B is methyl, ethyl or ethoxymethyl; and
   E is phenyl, alkyl-substituted phenyl, ether-substituted phenyl or halophenyl, and optionally, E is phenyl or fluorophenyl.

2. The positive electrode slurry according to claim 1 or 2, wherein
   the polyether phosphate has a number average molecular weight ranging from 10,000 to 80,000, optionally 10,000 to 60,000, and more optionally 30,000 to 50,000.

3. The positive electrode slurry according to claim 1, wherein
   based on the total molar amount of structural unit (I) to structural unit (IV), the molar proportion of structural unit (I) is 0 to 75 mol%, the molar proportion of structural unit (II) is 0 to 65 mol%, the molar proportion of structural unit (III) is 5 to 65 mol%, and the molar proportion of structural unit (IV) is 4 to 15 mol%, wherein the molar proportions of structural unit (I) and structural unit (II) are not both zero.

4. The positive electrode slurry according to any one of claims 1 to 3, wherein the weight ratio of the polyether phosphate to the positive electrode active material ranges from 0.0005 to 0.030, optionally 0.001 to 0.02, more optionally 0.001 to 0.01, and most optionally 0.001 to 0.007.

5. The positive electrode slurry according to any one of claims 1 to 4, wherein the positive electrode active material is selected from at least one of lithium iron phosphate, lithium iron manganese phosphate, lithium manganese oxide, lithium cobalt oxide, lithium nickel cobalt manganese oxide, lithium nickel cobalt aluminum oxide, lithium nickel oxide or a mixture thereof.

6. The positive electrode slurry according to any one of claims 1 to 5, wherein

the positive electrode slurry has a gelling factor G ranging from 0 to 1, and optionally 0 to 0.3,
wherein G = (m1 - m2)/ml, and when G = 0 to 0.3, it is determined that the slurry is not gelled, and when G > 0.3, it is determined that it is gelled;
where m1 is the mass of the positive electrode slurry obtained after filtering 2 kg of an initial positive electrode slurry for 10 min with a 100-mesh filter screen,
and m2 is the mass of the positive electrode slurry obtained after filtering 2 kg of a positive electrode slurry that is left for 48 hours for 10 min with a 100-mesh filter screen, wherein,
the positive electrode slurry used in the measurement of m1 and the positive electrode slurry used in the measurement of m2 are the same batch of positive electrode slurry.

7. A positive electrode plate comprising

a positive electrode current collector; and
a positive electrode film layer on at least one surface of the positive electrode current collector, wherein the positive electrode film layer is prepared from the positive electrode slurry according to any one of claims 1 to 6, and the mass of the positive electrode film layer per unit area plate ranges from 13 to 43 mg/cm$^2$, optionally 20 to 43 mg/cm$^2$, more optionally 22 to 33 mg/cm$^2$, and most optionally 25 to 31 mg/cm$^2$, wherein the mass is the mass of the positive electrode film layer on a single surface of the plate.

8. The positive electrode plate according to claim 7, wherein the positive electrode film layer comprises two sublayers which are parallel to the positive electrode current collector and overlap each other, wherein the ratio of the weight content of polyether phosphate in the sublayer closer to the positive electrode current collector to the weight content of polyether phosphate in the sublayer farther from the positive electrode current collector ranges from 0 to 60, and optionally 0.1 to 30.

9. The positive electrode plate according to claim 7 or 8, wherein

in the case that the flexibility of the positive electrode plate is measured by winding needles,
when the diameter R of the winding needle ≤ 3.0 mm, the positive electrode plate does not crack, or
when the diameter R of the winding needle = 3.0 mm, the positive electrode plate cracks, but when the diameter R of the winding needle = 4.0 mm, the positive electrode plate does not crack.

10. The positive electrode plate according to any one of claims 7 to 9, wherein

the infiltration rate increase rate I of the positive electrode plate ranges from 2 to 20%, and optionally 6 to 15%, wherein

$$I = (I2 - I1)/I1 \times 100\%,$$

where I2 is the infiltration rate of the positive electrode plate in an electrolyte solution,
and I1 is the infiltration rate of the positive electrode plate without the polyether phosphate in the electrolyte solution,
wherein the positive electrode plate used in the measurement of I1 is the same as the positive electrode plate used in the measurement of I2, except that the positive electrode plate used in the measurement of I1 does not comprise the polyether phosphate, while the positive electrode plate used in the measurement of I2 comprises the polyether phosphate.

**11.** A secondary battery comprising the positive electrode plate according to any one of claims 7 to 10 or obtained from the positive electrode slurry according to any one of claims 1 to 6.

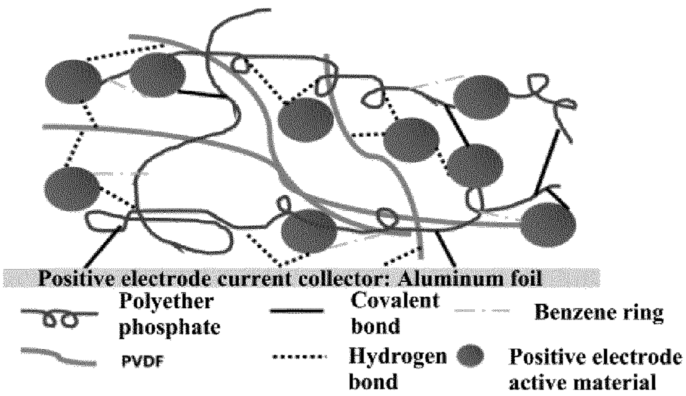


*FIG. 1*

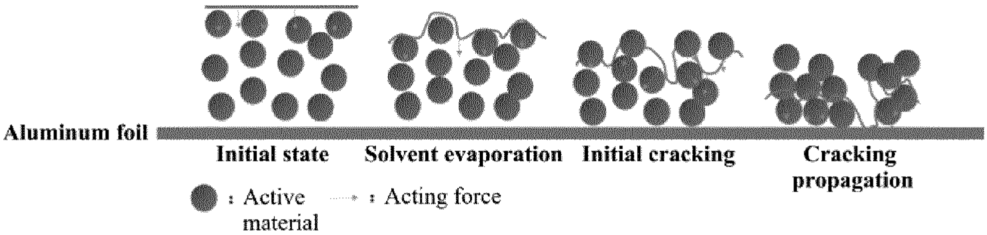


*FIG. 2*

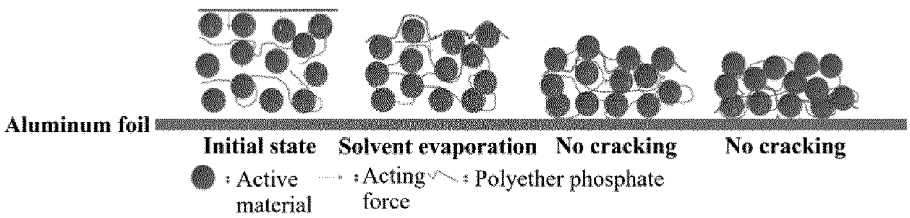


*FIG. 3*

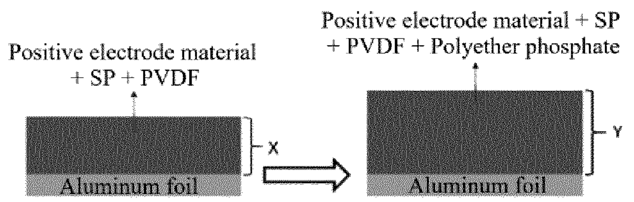


X: Maximum coating thickness for positive electrode formulation without additive; Y: Maximum coating thickness for positive electrode formulation with polyether phosphate; Y>X

*FIG. 4*

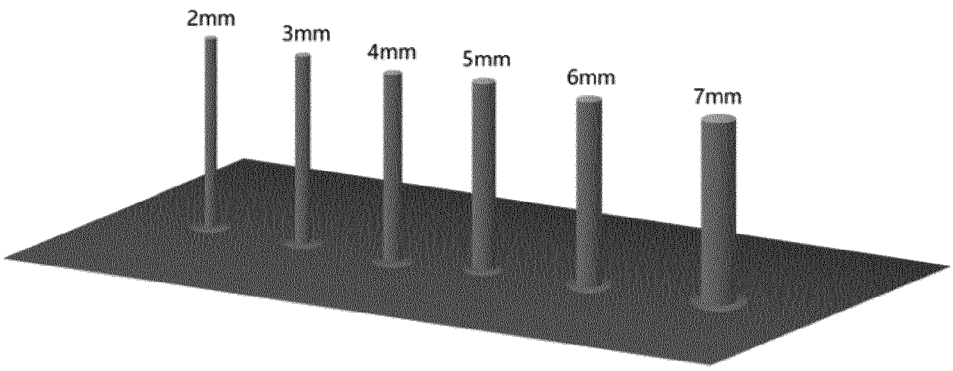


FIG. 5

**INTERNATIONAL SEARCH REPORT**

International application No. **PCT/CN2021/133144**

**A. CLASSIFICATION OF SUBJECT MATTER**

H01M 4/13(2010.01)i；H01M 4/62(2006.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS, CNTXT, SIPOABS, DWPI, USTXT: 环氧丙烷, 环氧乙烷, 聚醚, 磷酸酯, 正极, 氧化苯乙烯, 浆料, 添加剂, 分散剂, cathode, slurry, stuff, paste, polyether, phosphoric, phosphate, ester, phenylethylene, styrene, oxide, additive, dispersant

**C. DOCUMENTS CONSIDERED TO BE RELEVANT**

| Category* | Citation of document, with indication, where appropriate, of the relevant passages | Relevant to claim No. |
|---|---|---|
| Y | CN 113243055 A (PANASONIC INTELLECTUAL PROPERTY MANAGEMENT CO., LTD.) 10 August 2021 (2021-08-10) description, paragraphs 17-55 | 1-11 |
| Y | US 2002011183 A1 (GOLDSCHMIDT AG TH) 31 January 2002 (2002-01-31) description, paragraphs 3 and 17-42 | 1-11 |
| A | CN 103553886 A (UCHICAGO ARGONNE, LLC) 05 February 2014 (2014-02-05) entire document | 1-11 |
| A | CN 113527572 A (SHENZHEN YANYI NEW MATERIAL CO., LTD.) 22 October 2021 (2021-10-22) entire document | 1-11 |
| A | CN 102399362 A (EVONIK GOLDSCHMIDT GMBH) 04 April 2012 (2012-04-04) entire document | 1-11 |
| A | CN 104045822 A (EVONIK INDUSTRIES AG.) 17 September 2014 (2014-09-17) entire document | 1-11 |
| A | JP 2011014457 A (NIPPON CATALYTIC CHEMISTRY INDUSTRIAL) 20 January 2011 (2011-01-20) entire document | 1-11 |

☐ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **09 July 2022** | **03 August 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.
**PCT/CN2021/133144**

| Patent document cited in search report | Publication date (day/month/year) | Patent family member(s) | Publication date (day/month/year) |
|---|---|---|---|
| CN 113243055 A | 10 August 2021 | WO 2020137349 A1 | 02 July 2020 |
| | | US 2022069272 A1 | 03 March 2022 |
| | | JP WO2020137349 A1 | 18 November 2021 |
| US 2002011183 A1 | 31 January 2002 | DE 10029648 C1 | 07 February 2002 |
| | | DE 50104174 D1 | 25 November 2004 |
| | | EP 1167452 A2 | 02 January 2002 |
| | | CA 2350765 A1 | 15 December 2001 |
| | | ES 2228695 T3 | 16 April 2005 |
| | | US 6689731 B2 | 10 February 2004 |
| | | EP 1167452 A3 | 14 May 2003 |
| | | EP 1167452 B1 | 20 October 2004 |
| CN 103553886 A | 05 February 2014 | CN 102918701 A | 06 February 2013 |
| | | JP 2013530944 A | 01 August 2013 |
| | | KR 20130100884 A | 12 September 2013 |
| | | WO 2011149970 A2 | 01 December 2011 |
| | | US 2011294003 A1 | 01 December 2011 |
| | | EP 2539956 A2 | 02 January 2013 |
| | | WO 2011149970 A3 | 01 March 2012 |
| | | US 8609287 B2 | 17 December 2013 |
| | | JP 5460922 B2 | 02 April 2014 |
| | | EP 2539956 A4 | 23 April 2014 |
| | | CN 103553886 B | 06 July 2016 |
| | | CN 102918701 B | 03 May 2017 |
| | | EP 2539956 B1 | 06 September 2017 |
| | | KR 101831458 B1 | 04 April 2018 |
| CN 113527572 A | 22 October 2021 | None | |
| CN 102399362 A | 04 April 2012 | DE 102010039140 A1 | 16 February 2012 |
| | | EP 2418234 A1 | 15 February 2012 |
| | | US 2012037036 A1 | 16 February 2012 |
| | | JP 2012041341 A | 01 March 2012 |
| | | CA 2748650 A1 | 10 February 2012 |
| | | EP 2418234 B1 | 27 March 2013 |
| | | JP 5969181 B2 | 17 August 2016 |
| CN 104045822 A | 17 September 2014 | BR 102014006355 B1 | 12 January 2021 |
| | | JP 2014181236 A | 29 September 2014 |
| | | EP 2778170 A1 | 17 September 2014 |
| | | ES 2659230 T3 | 14 March 2018 |
| | | DE 102013204605 A1 | 18 September 2014 |
| | | BR 102014006355 A2 | 21 October 2014 |
| | | US 2014274863 A1 | 18 September 2014 |
| | | US 9115335 B2 | 25 August 2015 |
| | | CN 104045822 B | 13 October 2017 |
| | | EP 2778170 B1 | 15 November 2017 |
| JP 2011014457 A | 20 January 2011 | None | |

Form PCT/ISA/210 (patent family annex) (January 2015)